# EUROPEAN PATENT SPECIFICATION

(11) **EP 0 589 527 B1**
(45) Date of publication and mention of the grant of the patent: **28.07.1999**
(21) Application number: 93202704.8
(22) Date of filing: 17.09.1993
(51) Int. Cl.: C08F 10/00, C08F 4/26

(54) **Polymerization process**
Polymerisationsverfahren
Procédé de polymérisation

(30) Priority: 21.09.1992 EP 92202890
(43) Date of publication of application: 30.03.1994
(73) Proprietor: Montell Technology Company bv, 2132 MS Hoofddorp (NL)
(72) Inventor: Drent, Eit, NL-1031 CM Amsterdam (NL); Pello, Dennis Humphrey Louis, NL-1031 CM Amsterdam (NL); Jager, Willem Wabe, NL-1031 CM Amsterdam (NL)
(74) Representative: Zanoli, Enrico

(56) References cited:
- US-A- 4 599 476

## Description

The invention relates to a process for the polymerization of ethylenically unsaturated compounds. In the present specification, unless otherwise stated, the term "polymerization" includes "oligomerization" but does not include "dimerization".

The polymerization of ethylenically unsaturated compounds, in particular of lower monoolefins such as ethene and propene, is well known in the art. The process can be carried out with the aid of a catalyst of the Ziegler-type, i.e. a catalyst derived from a transition metal halide and an aluminium alkyl compound. In view of the pyrophoric nature of aluminium alkyls, hazards are involved in handling these compounds. Moreover, often a relatively rapid deactivation is observed, probably due to a reaction between the cationic and the anionic component in the catalyst system. Attempts have been made to improve the stability of the cationic component, thus counteracting the deactivation of the catalyst, e.g. by adding other aluminium compounds such as alumoxane. However, in view of the large excess of alumoxane required, and the sensitivity of the catalyst to basic impurities such attempts have sofar met with little success.

It has also been tried to use catalysts based on a Group IV A organometallic compound, such as a zirconium-, titanium- or hafnium-compound, combined with a boron compound such as a carborane. These catalysts which are described e.g. in EP.A-277003, have a low degree of compatibility with monomers and solvents containing functional groups and hence their suitability is limited.

In US Patent No.4,689,437 a process for the oligomerization of ethene or the co-oligomerization of a mixture of ethene and propene is described with the aid of a complex catalyst obtained as reaction product of
a) a compound of nickel, chromium, cobalt, iron and/or copper,
b) a compound capable of transferring a hydride, alkyl, alkenyl, alkynyl or aryl group from itself to the said metal compound, said compound b) acting as a catalyst activator in the event that the metal in compound a) is not in a zero valent state or is not bound to a hydride, alkyl, alkenyl, alkynyl or aryl group and
c) at least one organophosphorus sulphonate ligand of a specified structure.

Also known is a, likewise complex, catalyst system disclosed in EP.A-454231 which comprises
a) an active cationic portion of the formula LM-R⁺ wherein M is a Group VIII metal, L represents one or more stabilizing ligands and R is hydrogen, hydrocarbyl or substituted hydrocarbyl and
b) a stabilizing anionic portion of the formula 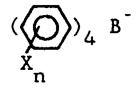
wherein X is fluorine or chlorine, a hydrocarbyl or substituted hydrocarbyl radical and n is an integer from 1 to 5. The cationic portion is exemplified by cobalt, linked to an optionally substituted cyclopentadienyl radical, to a neutral two-electron donor ligand and to R, having one of the above meanings and by nickel or palladium, linked to two two-electron donor ligands or to a bidentate ligand having two neutral two-electron donor moieties and to R, again having one of the aforesaid meanings.

A more attractive catalyst system for converting olefins is disclosed in US Patent No. 4,599,476. The catalyst system is formed by combining a palladium and/or ruthenium compound and an acid with a pKa of less than 2, except hydrohalogenic acids, preferably in the additional presence of a monodentate ligand containing at least one atom of Group V A of the Periodic Table, in particular nitrogen or phosphorus.

Whilst the use of this catalyst system results in high olefin conversions, it appears that the reaction is highly selective with respect to dimers, whereas only minor amounts of trimers and higher oligomers are formed.

Surprisingly it has now been found that with a catalyst system whereby palladium is combined with an acid containing in its molecule an atom of Group V A of the Periodic Table which atom complexes with palladium, polymers are formed in high yields.

As has been indicated above the term "polymers", if not otherwise stated, also encompasses "oligomers", i.e. compounds obtained from three up to twenty monomer units. The term does not include "dimers" obtained by combining two monomer units.

The invention relates to a process for the polymerization of ethylenically unsaturated compounds by contacting the monomer(s) under polymerization conditions with a catalyst system obtainable by combining
a) a source of palladium cations and
b) an acid having a pKa of less than 3, and containing an atom of Group V A of the Periodic Table of Elements, which atom is capable of complexing with palladium in the catalyst system.

As source of palladium cations, conveniently a palladium salt is used.

Suitable palladium salts are mineral salts, such as palladium sulphate, palladium nitrate and palladium phosphate. Palladium halides are not recommended, in view of the corrosivity of these compounds.

Other suitable palladium salts are salts of sulphonic acids, such as methylsulphonic acid, trifluoro methanesulphonic acid and p-toluenesulphonic acid and salts of carboxylic acids, such as acetic acid and propionic acid, halo-acetic acids, for example trifluoro- and trichloroacetic acid, oxalic acid and citric acid.

As source of palladium cations use may also be made of the metal in its elemental form, or in a zero valent state, e.g. in complex form such as in palladium-dibenzylacetone or palladium-tetrakis-tri-phenylphosphine. These sources are generally applied in combination with a protonic acid, thus yielding the palladium cations in situ.

Palladium salts of carboxylic acids are preferred sources of palladium cations, in particular palladium acetate.

The catalyst systems used in the process according to the invention comprise anions of acids as defined above under b). The anions generally are formed by contacting the acid with the source of palladium cations, usually a palladium carboxylate.

The acids as defined under b) are strong acids, i.e. acids having a pKa of less than 3. Preferably acids are selected having a pKa of at most 2.

A preferred class of acids, as defined under b) can be indicated by the general formula

Q-R-An⁻H⁺ (1)

wherein Q is a group containing an atom of Group V A of the Periodic Table, An⁻ is an anionic moiety and R is a bridging group connecting the said atom of Group V A with An⁻.

Suitable anionic moieties -An⁻ are for example -SO₃⁻, -COO⁻, -PO₃⁻, -AsO₃⁻ and -SiO₂⁻ groups. Of these, the -SO₃⁻ group is in particular preferred. In order to fulfil the requirement of a pKa of less than 3, in some cases acids of formula (1) are selected containing acidity-promoting groups which may be linked to the anionic moiety, such as haloalkylidene groups, in particular a -CCl₂- or a -CF₂- group. Examples of acids containing acidity-promoting groups are acids of formula (1), wherein Q is attached to a group -CF₂-COOH, -CCl₂-COOH, CF₂-SO₃H and -CClF-SO₃H.

The acids as defined above under b) contain an atom of Group V A of the Periodic Table, viz. nitrogen, phosphorus, arsenic and antimony. Preferably they contain a phosphorus atom. If desired, acids may be used containing more than 1 atom of Group V A, for example a phosphorus and a nitrogen atom, or two phosphorus atoms. It is essential, however, that the acid contains one atom of Group V A which is capable of complexing with palladium in the catalyst system. In the acids, represented by formula (1), the Group V A atom, in particular the phosphorus atom, is linked via a bridging group R to An. In order to fulfil the requirement that the Group V A atom is indeed capable of complexing with palladium in the catalyst system, the size and structure of the bridging group R is of substantial importance.

It is recommended that the bridging group R in the acids of formula (1) comprises from 1 to 3 atoms, preferably at most two atoms, in the bridge. In particular bridging groups are recommended containing one or two carbon atoms in the bridge, suitable bridging groups being for example -CH₂-, -CH₂-CH₂-, -CF₂-, -CHCl-, -CCl₂-, -C(CH₃)₂-, -CH₂-CF₂- and -CF₂-CF₂- groups.

The bridging atoms, in particular if one or more bridging atoms are carbon atoms, may form part of cyclic structures, such as cycloalkyl groups, heterocyclic groups, or, preferably, aromatic groups such as a phenyl-, alkylphenyl- or naphthyl group.

Furthermore, acids may be used, containing cyclic structures in which both an atom of Group V A and one or more bridging atoms participate. Examples are acids containing a pyridyl or a chinolinyl group, substituted by an anionic moiety.

In general acids of formula (1) are recommended, containing a group Q consisting of an atom of Group V A, linked to one or two aliphatic-, cycloaliphatic- or aromatic groups, optionally containing one or more substituents such as halogen atoms, hydroxy-, cyano-, amino-, alkylamino-, alkoxy- or carboxyl groups. If desired, acids may be used wherein Q comprises a cyclic or bicyclic group whereby the atom of Group V A is one of the ring atoms, e.g. a 1,2-cyclooctylene phosphino group.

Examples of suitable groups Q containing aliphatic groups are dialkylphosphino groups such as dimethylphosphino, di-n-butylphosphino, di-sec.butylphosphino, di-tert.butylphosphino, di-isopropylphosphino, di-n-propylphosphino, butylethylphosphino and diethylphosphino groups, dialkylarsino groups such as dipropylarsino and di.tert.butylarsino groups and di.alkylstibino groups such as di-n-butylstibino- and diethylstibino groups.

Examples of suitable groups Q containing cycloaliphatic groups are dicyclopentylphosphino and dicyclohexylphosphino groups.

Examples of suitable groups Q containing aromatic groups are diphenylphosphino, di-biphenylphosphino, diphenylarsino, dinaphthylphosphino and diphenylstibino groups. Mixed structures such as aliphatic-aromatic and cycloaliphatic-aromatic structures may be used, if desired.

Preference is given to groups Q containing aromatic groups, in particular to the diphenylphosphino group.

Thus, particular preferred acids as defined above under b) are acids comprising a diphenylphosphino group linked via a phenylene group to a sulphonato group. In these acids the diarylphosphino group and the sulphonato group are preferably in the ortho position, because this enables the phosphorus atom to complex readily with the palladium atom in the catalyst system.

It is observed that, for example, 4 sulphonato-, 9,10-phenanthroline is unlikely to be a very suitable acid for obtaining the catalyst systems of the invention, because the position of the anionic group with respect to the atoms of Group V A substantially prevents the possibilities for the formation of a complex bond between nitrogen and palladium. On the other hand, 1-sulphonato-8-di-n-butylphosphinonaphthalene is considered a very suitable acid for preparing the catalyst systems of the invention.

The catalyst system of the invention may suitably be prepared separately, by combining the source of palladium cations or a precursor thereof and the acid as defined above under b), if desired in the presence of a suitable solvent, before supplying the monomer(s) to be polymerized. It is also possible to prepare the catalyst in situ by introducing the catalyst components into the reactor and at the same time adding the monomer(s) and any other compound to be present in the reaction medium.

For preparing the catalyst system, the molar amounts of palladium compound and acid as defined above under b) may be substantially equal. Usually an excess of the acid is preferred, for example up to 10, preferably up to 5 equivalents of acid per gram atom of palladium.

In the process according to the invention only catalytic amounts of the catalyst system are required. Usually the amount of catalyst is in the range of 10⁻⁸ to 10⁻² gram atom palladium per mole of ethylenically unsaturated compound to be polymerized. Preferably, the catalyst is applied in an amount between 10⁻⁷ and 10⁻³ and most preferably in the range of 10⁻⁶ to 10⁻⁴ gram atom palladium per mole of ethylenically unsaturated compound to be polymerized.

Ethylenically unsaturated compounds to be used as starting material in the process of the invention include unsaturated hydrocarbons and unsaturated compounds, comprising besides hydrogen and carbon atoms at least one other atom in their molecules such as an oxygen or nitrogen atom.

Olefins, in particular monoolefins are preferred starting materials, for example ethene, propene, butene-1 and mixtures thereof. They may be applied together with other unsaturated hydrocarbons, for example cyclic olefins such as cyclopentene and cyclohexene, diolefins such as butadiene, 1,4-pentadiene and 1,5-hexadiene, olefins substituted by aromatic groups such as styrene, allylbenzene, p-methylstyrene and alpha-methylstyrene and acetylenically unsaturated compounds such as acetylene, phenylacetylene and isopropenylacetylene.

The invention is of particular interest for the preparation of co-polymers whereby one of the monomers is a lower olefin, in particular ethene and propene and at least one of the other monomers contains a functional group such as a hydroxy, cyano, anhydride or ester group.

Examples of suitable monomers of this category are 3-buten-1-ol, 5-hexen-1-ol, 10-undecen-1-ol, alkylesters of acrylic or methacrylic acid such as methylacrylate, methylmethacrylate and ethylacrylate, vinyl esters such as vinylacetate and vinylpropionate and anhydrides such as the anhydride of 5-norbornene-2,3-dicarboxylic acid.

If desired, the process of the invention may be carried out in the presence of a suitable solvent. Various solvents such as hydrocarbons, alcohols, ethers, esters and ketones may be used, including an excess of one of the monomers, provided this monomer is in the liquid phase under the reaction conditions of the process.

Surprisingly it has been found that the use of different reaction solvents results in the formation of polymer products having different molecular weights. Generally the use of an apolar solvent results in the formation of polymers of relatively high molecular weights, whereas the presence of a polar solvent will result in the formation of oligomers, i.e. reaction products containing from three to twenty monomer units. For example, in the event of a reaction solvent, substantially consisting of polar compounds such as water or di- or trihydric alcohols, e.g. ethylene glycol and glycerol, predominantly oligomeric products are formed.

On the other hand with a reaction solvent, substantially consisting of apolar compounds, such as the dimethylether of ethylene glycol (diglyme) or diethylether, polymer products of higher molecular weight are formed.

It will be appreciated that the utility of the products obtained will depend, inter alia, on the molecular weight of the products.

Oligomeric products may find use e.g. as starting materials in the production of plasticizers, lubricants and surfactants. The products of higher molecular weight are of interest as thermoplastics and may be applied for films, sheets, packaging materials and the like.

The process of the invention may be carried out at moderate reaction conditions, both in the event that in a predominantly apolar reaction medium products of relatively high molecular weight are prepared and in the event that in a polar reaction medium oligomers are produced.

Reaction temperatures are usually in the range of 20 to 180 °C, temperatures in the range of 40 to 130 °C being preferred.

Usually superatmospheric reaction pressures are applied, for example in the range of 1 to 100 bar, pressures outside the indicated range not being precluded. Preferably a pressure in the range of 2 to 60 bar is applied.

The invention is illustrated by the following, non-limiting examples. The experiments were performed in a magnetically stirred 250 ml Hastelloy C autoclave ("Hastelloy" is a Trade Mark). In all experiments the catalyst components, the co-monomer if any and the solvent(s) were introduced into the autoclave. The autoclave was pressurized with the monomer (ethene) and then heated to the reaction temperature, which was maintained during the entire reaction period. The contents of the autoclave were then cooled to the ambient temperature. The products were analyzed by standard ¹³C and ²H-NMR techniques (NMR test for determining the Molecular Number Mₙ, measured at 100 °C in solution in trichlorobenzene).

For the oligomeric products the K factor was established, which is indicative of the relative proportions of the product olefins. The K-factor is the molar ratio of [Cₙ₊₂]/[Cₙ], calculated from the slope of the graph of log [Cₙ mol%] versus n, where n is the number of carbon atoms in a particular product olefin.

The results are shown in the Table, wherein the following abbreviations are used:
- Pd(OAc)₂ =: palladiumacetate
- DPBS =: o.diphenylphosphinobenzenesulphonic acid
- MA =: methylacrylate
- t.BS =: tertiary butylsulphonic acid
- MS =: methylsulphonic acid
- NMP =: N-methylpyrrolidone
- EG =: ethyleneglycol
- o.DPP =: ortho-diphenylphosphino pyridine
- NDCA =: anhydride of 5-norbornene-2,3-dicarboxylic acid
- HMN =: 2-hydroxymethyl-5-norbornene
- o-DCB =: ortho-dichlorobenzene

As can be seen from Examples XV - XIX, the use of a polar solvent results in the formation of oligomeric products.

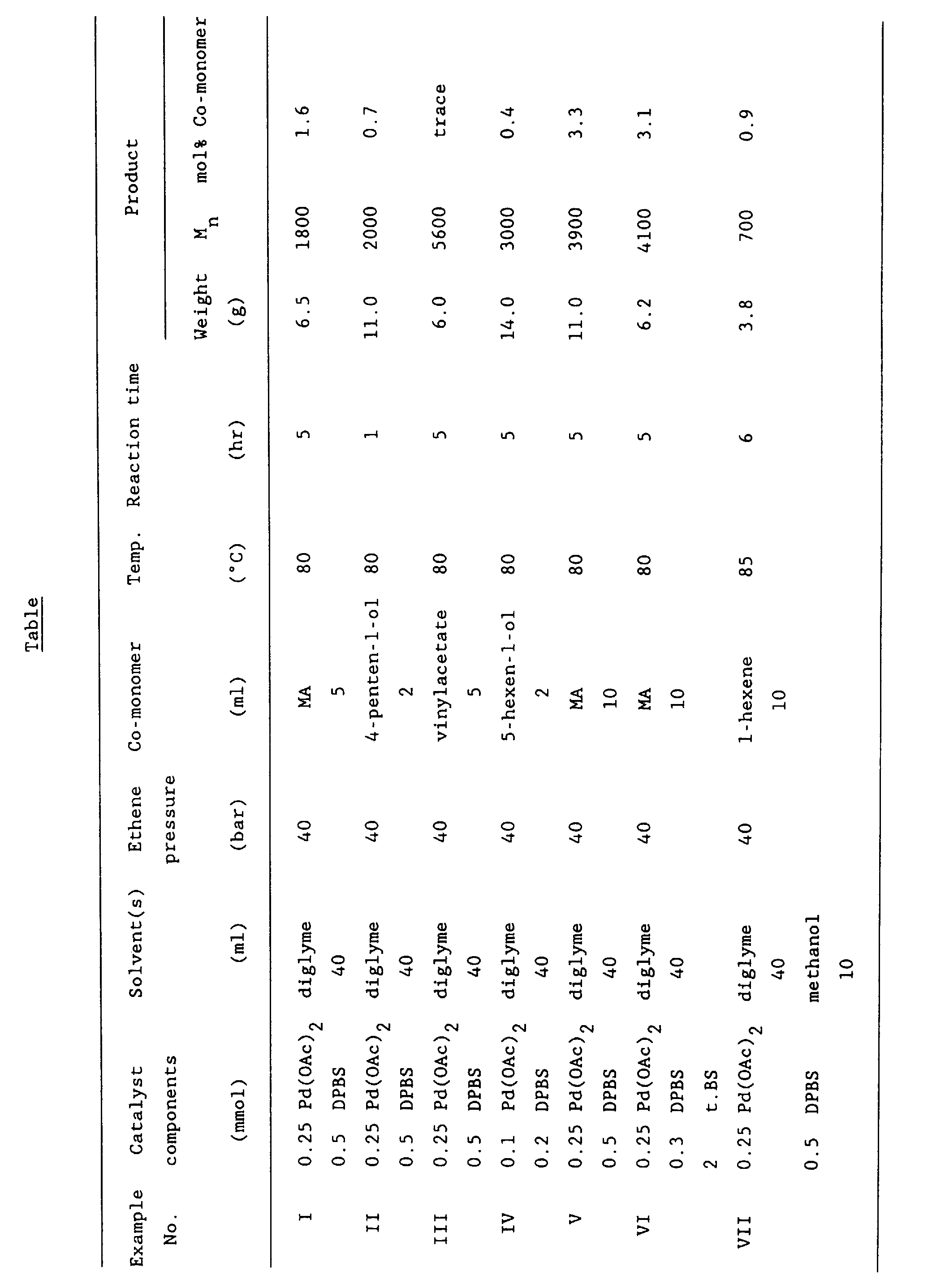

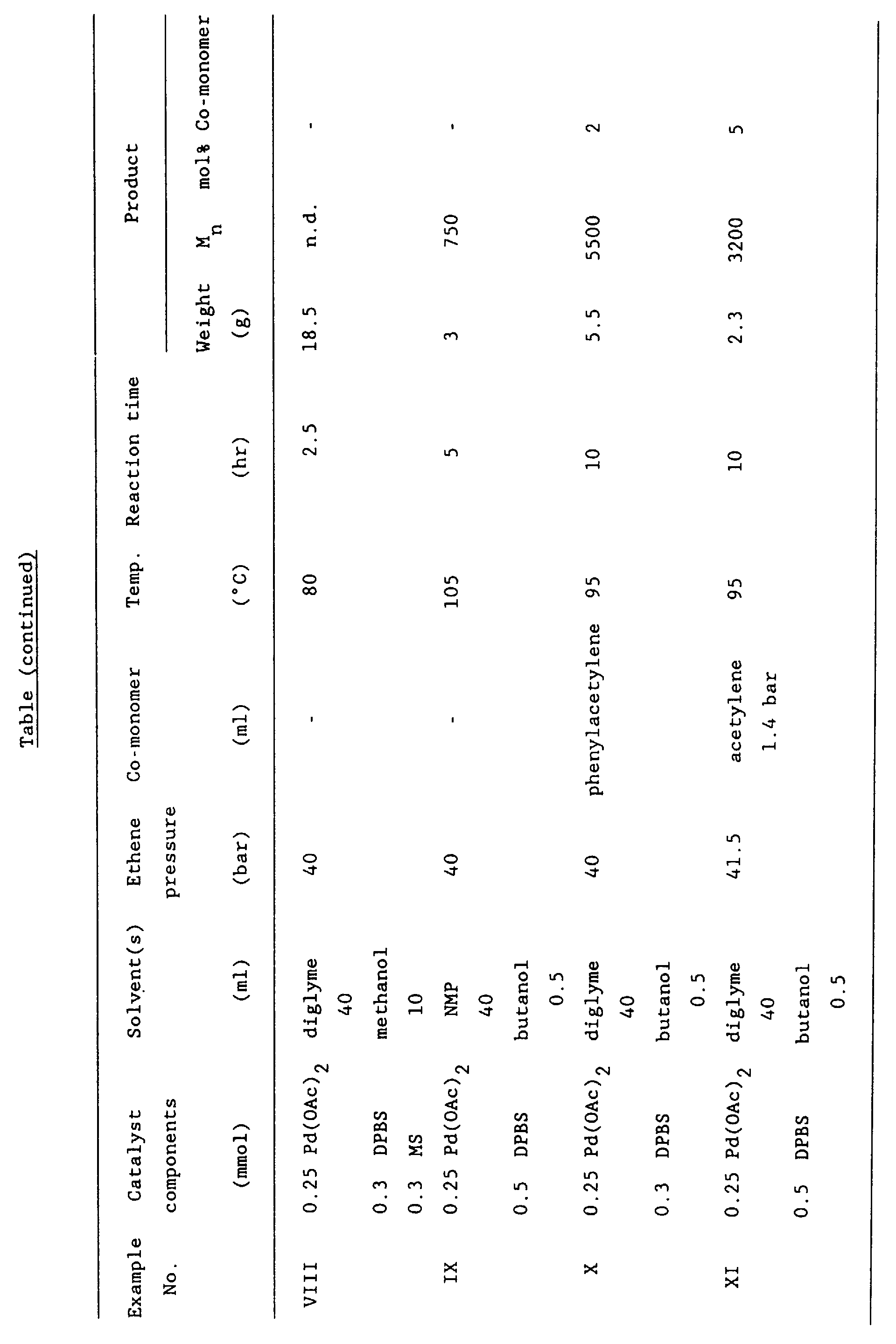

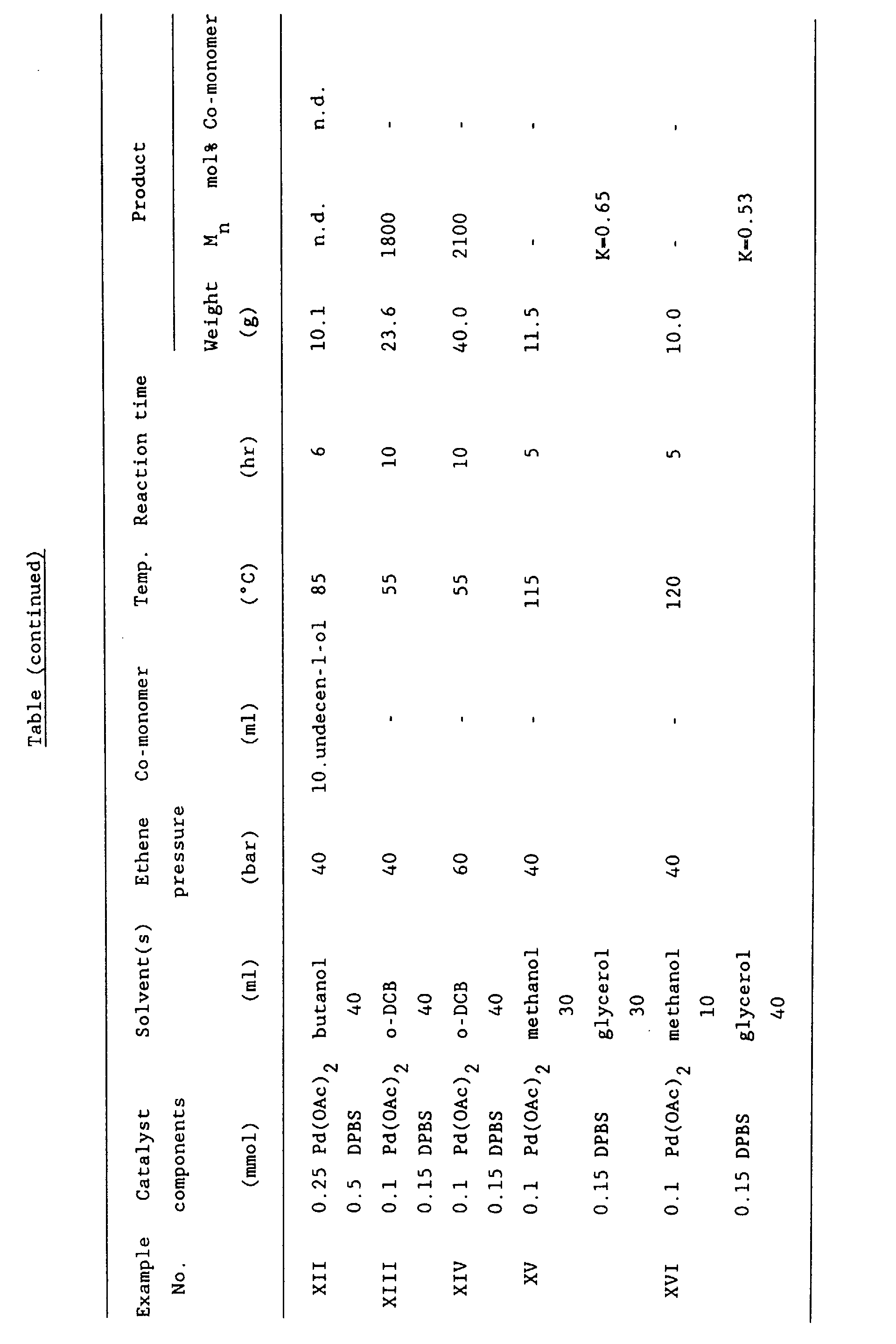

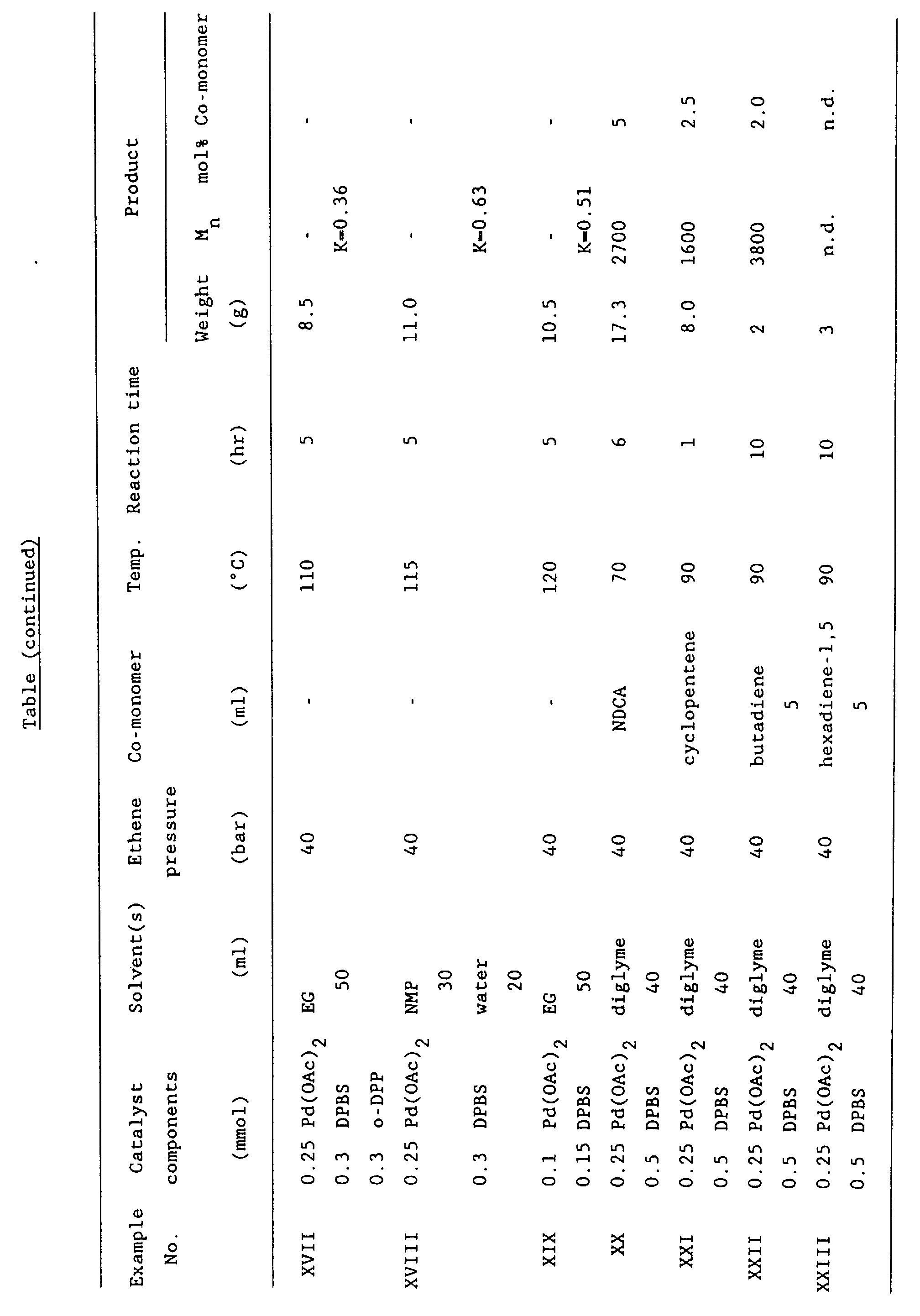

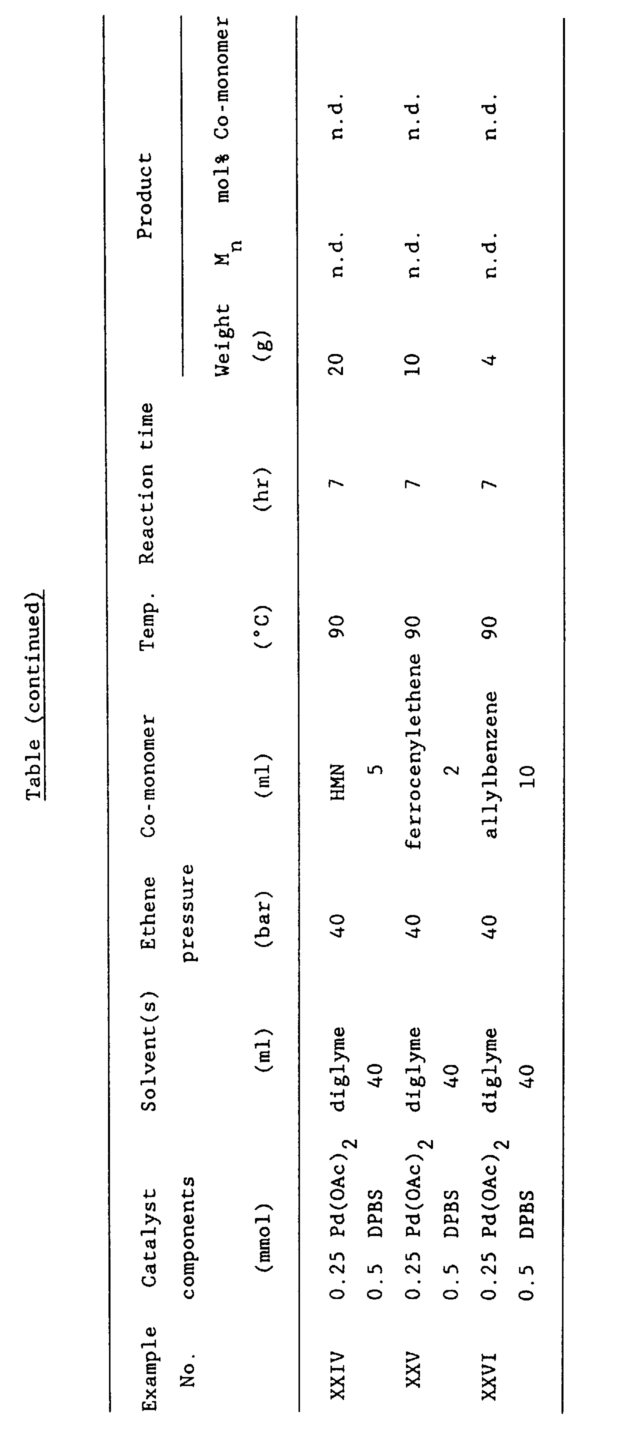

## Claims

1. A process for the polymerization of ethylenically unsaturated compounds by contacting the monomer(s) under polymerization conditions with a catalyst system obtainable by combining
a) a source of palladium cations and
b) an acid having a pKa of less than 3, and containing an atom of Group V A of the Periodic Table of Elements, which atom is capable of complexing with palladium in the catalyst system.

2. A process as claimed in claim 1, characterized in that the catalyst system comprises an anion of an acid as defined in claim 1 under b), having a pKa of at most 2.

3. A process as claimed in claim 1 or 2, characterized in that the catalyst system comprises an anion of an acid as defined in claim 1 under b) wherein an anionic moiety is connected to an atom of Group V A via a bridging group having at most two atoms in the bridge.

4. A process as claimed in any of claims 1 to 3, characterized in that the acid as defined in claim 1 under b) is o-diphenylphosphino benzenesulphonic acid.

5. A process as claimed in any of claims 1-4, characterized in that the amount of catalyst is selected in the range of 10⁻⁷ to 10⁻³ gram atom palladium per mole of ethylenically unsaturated compound to be polymerized.

6. A process as claimed in any of claims 1-5, characterized in that the catalyst system is obtained by combining up to 5 equivalents of acid as defined in claim 1 under b) per palladium atom.

7. A process as claimed in any of claims 1-6, characterized in that as ethylenically unsaturated compound ethene or a mixture of ethene and a functionalized olefin is used.

8. A process as claimed in any of claims 1-7, characterized in that the polymerization is carried out at a temperature in the range of 40-130 °C and a pressure in the range of 2-60 bar.

9. A process as claimed in any of claims 1-8, characterized in that the polymerization is carried out in the presence of an apolar solvent or in the presence of a polar solvent.

## Patentansprüche

1. Verfahren zur Polymerisation von ethylenisch ungesättigten Verbindungen durch Inkontaktbringen des/der Monomer(e) unter Polymerisationsbedingungen mit einem Katalysatorsystem, erhältlich durch Kombination
a) einer Quelle von Palladiumkationen und
b) einer Säure mit einem pKa-Wert von weniger als 3 und enthaltend ein Atom der Gruppe VA des Periodensystems der Elemente, das mit Palladium in dem Katalysatorsystem komplexieren kann.

2. Verfahren nach Anspruch 1, dadurch gekennzeichnet, daß das Katalysatorsystem ein Anion einer wie in Anspruch 1 unter b) definierten Säure, die einen pKa-Wert von maximal 2 aufweist, umfaßt.

3. Verfahren nach Anspruch 1 oder 2, dadurch gekennzeichnet, daß das Katalysatorsystem ein Anion einer wie in Anspruch 1 unter b) definierten Säure umfaßt, wobei ein anionischer Teil an ein Atom der Gruppe VA über eine Brückengruppe, die maximal zwei Atome in der Brücke aufweist, gebunden ist.

4. Verfahren nach einem der Ansprüche 1 bis 3, dadurch gekennzeichnet, daß die wie in Anspruch 1 unter b) definierte Säure o-Diphenylphosphinobenzolsulfonsäure ist.

5. Verfahren nach einem der Ansprüche 1-4, dadurch gekennzeichnet, daß die Katalysatormenge aus dem Bereich von 10⁻⁷ bis 10⁻³ Grammatom Palladium pro Mol zu polymerisierender, ethylenisch ungesättigter Verbindung ausgewählt ist.

6. Verfahren nach einem der Ansprüche 1-5, dadurch gekennzeichnet, daß das Katalysatorsystem durch Kombination von bis zu 5 Äquivalenten einer wie in Anspruch 1 unter b) definierten Säure pro Palladiumatom erhalten wird.

7. Verfahren nach einem der Ansprüche 1-6, dadurch gekennzeichnet, daß als ethylenisch ungesättigte Verbindung Ethen oder ein Gemisch von Ethen und einem funktionalisierten Olefin verwendet wird.

8. Verfahren nach einem der Ansprüche 1-7, dadurch gekennzeichnet, daß die Polymerisation bei einer Temperatur im Bereich von 40-130°C und einem Druck im Bereich von 2-60 bar ausgeführt wird.

9. Verfahren nach einem der Ansprüche 1-8, dadurch gekennzeichnet, daß die Polymerisation in Gegenwart eines unpolaren Lösungsmittels oder in Gegenwart eines polaren Lösungsmittels ausgeführt wird.

## Revendications

1. Un procédé de polymérisation de dérivés éthyléniquement insaturés en mettant en contact le ou les monomère(s) dans les conditions de polymérisation avec un système catalytique obtenu en combinant :
(a) une source de cations de palladium; et
(b) un acide ayant un pKa inférieur à 3, et contenant un atome du groupe VA du Tableau Périodique des Eléments, ledit atome pouvant se complexer avec le palladium dans le système de catalyseur.

2. Un procédé selon la revendication 1, caractérisé en ce que le système catalytique comprend un anion d'un acide tel que défini dans la revendication 1 sous (b), ayant un pKa de 2 au plus.

3. Un procédé selon la revendication 1 ou 2, caractérisé en ce que le système catalytique comprend un anion d'un acide tel que défini dans la revendication 1 (b) dans lequel le reste anionique est lié à un atome du groupe VA par l'intermédiaire d'un groupe de liaison ayant au moins deux atomes dans le pont.

4. Un procédé selon l'une quelconque des revendications 1 à 3, caractérisé en ce que l'acide tel que défini dans la revendication 1 (b) est l'acide o-diphénylphosphinobenzènesulfonique.

5. Un procédé selon l'une quelconque des revendications 1 à 4, caractérisé en ce que la quantité de catalyseur est choisie dans la fourchette de 10⁻⁷ à 10⁻³ atomes gramme de palladium par mole de composé insaturé éthyléniquement à polymériser.

6. Un procédé selon l'une quelconque des revendications 1 à 5, caractérisé en ce que le système de catalyseur s'obtient en combinant jusqu'à cinq équivalents de l'acide tel que défini dans la revendication 1 (b), par atome de palladium.

7. Un procédé selon l'une quelconque des revendications 1 à 6, caractérisé en ce que l'on utilise, en tant que composé éthyléniquement insaturé, de l'éthène ou un mélange d'éthène et d'une oléfine fonctionnalisée.

8. Un procédé selon l'une quelconque des revendications 1 à 7, caractérisé en ce que l'on effectue la polymérisation à une température comprise entre 40 et 130°C et sous une pression comprise entre 2 et 60 bars.

9. Un procédé selon l'une quelconque des revendications 1 à 8, caractérisé en ce qu'on effectue la polymérisation en présence d'un solvant apolaire ou en présence d'un solvant polaire.
